# DEMANDE DE BREVET EUROPEEN

(11) **EP 1 277 978 A1**
(43) Date de publication de la demande: **22.01.2003**
(21) Numéro de dépôt: 02291650.6
(22) Date de dépôt: 02.07.2002
(51) Int. Cl.: F16C 33/78, F16C 19/38

(54) **Palier à corps roulants coniques pourvu d'un dispostif d'étanchéité**

(30) Priorité: 13.07.2001 FR 0109418
(71) Demandeur: S.N.R. ROULEMENTS, 74010 Annecy Cédex (FR)
(72) Inventeur: Bellufi, Stéphane, 74600 Seynod (FR)
(74) Mandataire: Geismar, Thierry

(57) **Abrégé**

L'invention concerne un palier à roulement du type comprenant une bague extérieure (1) et au moins une bague intérieure (2), lesdites bagues comprenant chacune au moins un chemin de roulement oblique (6) pour des corps roulants coniques (4) disposés entre elles, dans lequel un logement annulaire (12) est prévu entre lesdites bagues pour recevoir un dispositif d'étanchéité du palier, dans lequel le dispositif d'étanchéité comprend un joint d'étanchéité dynamique (16) associé à l'une des bagues, le diamètre intérieur du joint (16) étant supérieur ou égal au grand diamètre (Dₑₓₜ) de la surface de roulement du chemin (6) de la bague extérieure (1), et une armature annulaire (17) associée à l'autre bague, ladite armature (17) comprenant un logement annulaire (18) dans lequel le joint (17) est disposé pour frotter contre ladite armature lors de la rotation relative des bagues (1, 2).

## Description

L'invention concerne un palier à roulement ainsi qu'un procédé de montage d'un tel palier.

Les paliers suivant l'invention sont du type à corps roulants coniques, notamment à deux rangées de corps roulants coniques, qui permettent d'assurer la rotation relative d'une bague extérieure par rapport à au moins une bague intérieure.

Ce type de paliers, de par leur aptitude à supporter des efforts radiaux et axiaux importants, trouve particulièrement son application pour la mise en rotation d'une roue de véhicule automobile par rapport au châssis dudit véhicule.

L'un des problèmes qui se pose est de pouvoir assurer l'étanchéité dynamique de tels paliers.

On connaît, par exemple du document EP-0 458 123, des dispositifs d'étanchéité pour roulements à billes qui comprennent un joint d'étanchéité et une armature contre laquelle le joint vient frotter lors de la rotation.

Mais, du fait des contraintes de montage spécifiques aux paliers à corps roulants coniques, ce type de dispositifs d'étanchéité n'est pas utilisable dans de tels paliers. En effet, dans les paliers à corps roulants coniques, le montage de la bague extérieure sur la bague intérieure est effectué après la disposition des corps roulants sur la bague intérieure, alors que, dans le cas des roulements à billes, les corps roulants sont disposés préalablement sur la bague extérieure.

Pour résoudre ce problème, le document EP-0 687 825 propose d'équiper un palier à corps roulants coniques avec un dispositif d'étanchéité qui comprend une lèvre en contact frottant sur une face de la bague intérieure.

Toutefois, cette solution, si elle permet le montage du palier, n'est pas satisfaisante du point de vue de la fiabilité de l'étanchéité du palier.

En effet, la lèvre venant en contact directement sur la bague intérieure, l'étanchéité dépendra de l'état de surface de la zone de contact. Or, le choix du matériau formant la bague intérieure et donc son état de surface est limité par les contraintes d'utilisation du palier et ne peut donc pas être rendu optimum pour assurer l'étanchéité. En particulier, une usure rapide soit de la lèvre d'étanchéité soit de la zone de contact est à prévoir, ce qui limite la fiabilité du dispositif d'étanchéité. En outre, pour permettre le montage du palier, le dispositif d'étanchéité prévu dans le document EP-0 687 825 est de forme relativement complexe et donc difficilement réalisable selon un coût compatible avec les contraintes en vigueur dans l'industrie automobile.

L'invention vise donc notamment à remédier à ces inconvénients en proposant un dispositif d'étanchéité pour palier à corps roulants coniques qui soit fiable et facilement réalisable, tout en ne limitant pas la possibilité de montage dudit palier.

A cet effet et selon un premier aspect, l'invention propose un palier à roulement du type comprenant une bague extérieure et au moins une bague intérieure, lesdites bagues comprenant chacune au moins un chemin de roulement oblique pour des corps roulants coniques disposés entre elles, dans lequel un logement annulaire est prévu entre lesdites bagues pour recevoir un dispositif d'étanchéité du palier, dans lequel le dispositif d'étanchéité comprend un joint d'étanchéité dynamique associé à l'une des bagues, le diamètre intérieur du joint étant supérieur ou égal au grand diamètre de la surface de roulement du chemin de la bague extérieure, et une armature annulaire associée à l'autre bague, ladite armature comprenant un logement annulaire dans lequel le joint est disposé pour frotter contre ladite armature lors de la rotation relative des bagues.

Selon un deuxième aspect, l'invention propose un procédé de montage d'un tel palier, ledit procédé comprenant les étapes prévoyant de :
- monter les corps roulants sur la bague intérieure ;
- monter la bague extérieure préalablement pourvue du joint d'étanchéité sur la bague intérieure préalablement pourvue de l'armature.

Selon un troisième aspect, l'invention propose un procédé de montage d'un tel palier comprenant une bague intérieure en deux parties sur lesquelles sont respectivement disposées une rangée de corps roulants, ledit procédé comprenant les étapes prévoyant de :
- monter la première rangée de corps roulants sur la première partie de bague intérieure ;
- monter la bague extérieure préalablement pourvue du joint d'étanchéité sur la première partie de bague intérieure préalablement pourvue de l'armature ;
- monter, dans la bague extérieure, la deuxième partie de bague intérieure préalablement pourvue de la deuxième rangée de corps roulants.

D'autres objets et avantages de l'invention apparaîtront au cours de la description qui suit, faite en référence aux dessins annexés, dans lesquels :
- la figure 1 est une vue partielle et en coupe longitudinale d'un mode de réalisation d'un palier selon l'invention ;
- la figure 2 est une vue partielle et en coupe longitudinale du dispositif d'étanchéité qui équipe le palier de la figure 1 ;
- les figures 3 à 7 sont respectivement une vue partielle et en coupe longitudinale d'une variante de réalisation d'un dispositif d'étanchéité pour palier à corps roulants coniques suivant l'invention.

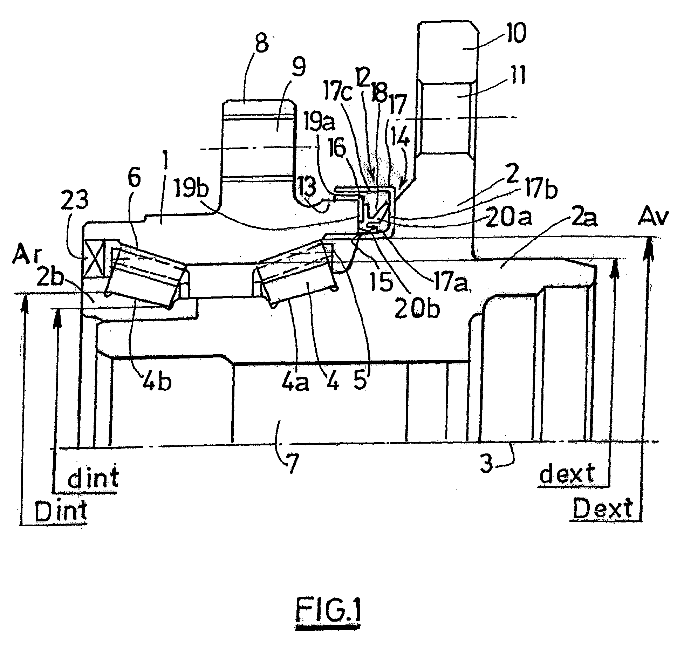

Sur la figure 1 est représenté un palier à roulement comprenant une bague extérieure fixe 1 ainsi qu'une bague intérieure tournante 2. La bague intérieure 2 est réalisée en deux parties 2a, 2b, la deuxième partie 2b étant montée, par exemple par emmanchement, dans un logement prévu dans la première partie 2a.

Pour assurer la rotation relative autour d'un axe 3 de la bague intérieure 2 par rapport à la bague extérieure 1, deux rangées de corps roulants coniques 4, maintenus à équidistance pas une cage 5, sont prévues entre lesdites bagues. A cet effet, chaque bague 1, 2 est pourvue d'un chemin de roulement oblique 6 agencé pour recevoir les corps roulants 4 respectivement entre la première partie 2a et la bague extérieure 1 et entre la deuxième partie 2b et la bague extérieure 1.

Toutefois, la description réalisée en relation avec ce mode de réalisation est directement transposable à un palier dans lequel la bague extérieure est tournante et la bague intérieure est fixe, ou à un palier comprenant une bague intérieure en une partie sur laquelle les deux chemins de roulement sont réalisés.

Dans la description, les termes « extérieur » et « intérieur » sont définis par rapport à un plan respectivement éloigné et à proximité de l'axe 3, les termes « axial» ou « transversal » sont définis par rapport à un plan parallèle à l'axe 3, les termes « radial » ou « latéral » sont définis par rapport à un plan perpendiculaire à l'axe 3, les termes « avant » et « arrière » sont définis par rapport aux indices av et ar placés sur la figure 1.

Pour permettre au palier de supporter aussi bien des efforts axiaux que radiaux, les deux rangées de corps roulants 4 sont inclinées par rapport à l'axe 3 et en opposition l'une par rapport à l'autre. Ainsi, les chemins de roulement 6 présentent des surfaces annulaires de roulement pour les corps roulants, lesdites surfaces ayant respectivement un grand diamètre Dᵢₙₜ, Dₑₓₜ et un petit diamètre dᵢₙₜ, dₑₓₜ.

Le palier est plus particulièrement destiné à être utilisé pour la mise en rotation d'une roue de véhicule automobile par rapport au châssis dudit véhicule. A cet effet, la bague intérieure 2 est pourvue d'un alésage 7 d'axe 3 dans lequel le moyeu ou la fusée de roue peut être disposé, par exemple par emmanchement, et la bague extérieure 1 est associée au châssis du véhicule.

Dans le mode de réalisation représenté sur la figure 1, la bague extérieure 1 comprend une bride de fixation 8 du palier sur le châssis, ladite bride 8 comprenant des trous de fixation 9 agencés pour permettre l'association par boulonnage. Par ailleurs, la bague intérieure 2 comprend une bride de fixation 10 du palier à une structure tournante, par exemple formée par la jante de roue, ladite bride 10 comprenant des trous de fixation 11 agencés pour permettre l'association par boulonnage.

Le palier comprend en outre, coté avant, un logement annulaire 12 prévu entre la première partie 2a et la bague extérieure 1. A cet effet, la bague extérieure 1 comprend une extension axiale 13 et la première partie 2a comprend un logement 14 prévu en regard de ladite extension 13. Toutefois, et pour permettre la rotation relative des bagues 1, 2, un interstice 15 entre la première partie 2a et la bague extérieure 1 est prévu au niveau du logement 12.

Pour éviter la pollution de l'intérieur du palier par des contaminants externes et pour éviter la projection de lubrifiant en dehors du palier, l'invention propose de disposer un dispositif d'étanchéité dans le logement 12 afin de recouvrir l'interstice 15.

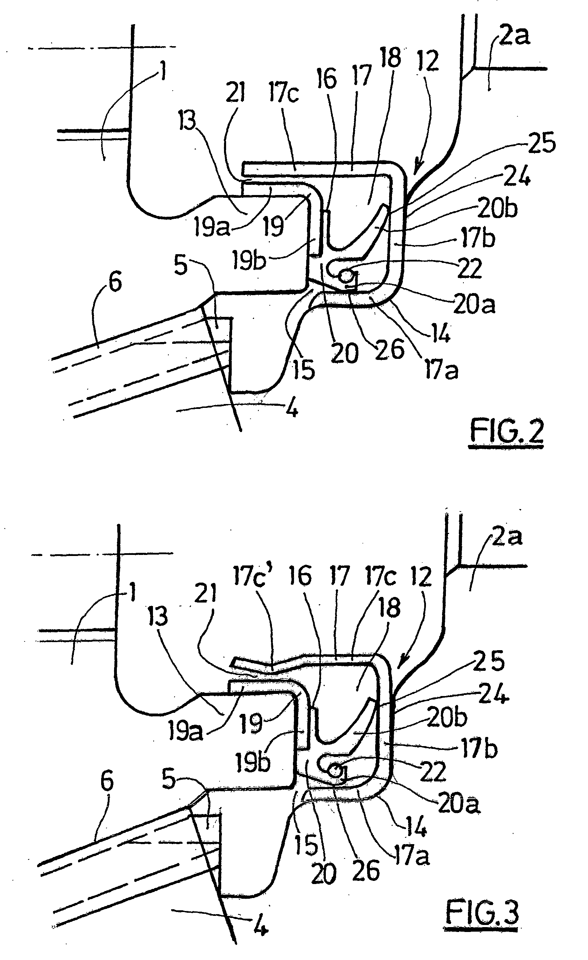

En relation avec les figures 1 et 2, on décrit ci-dessous un mode de réalisation d'un dispositif d'étanchéité équipant un palier suivant l'invention.

Le dispositif d'étanchéité comprend un joint d'étanchéité dynamique 16 associé à l'une des bagues et une armature annulaire 17 associée à l'autre bague. Dans le mode de réalisation représenté, le joint 16 est associé à l'extension axiale 13 de la bague extérieure 1 et l'armature 17 est disposée dans le logement 14 de la première partie 2a. Dans un exemple de réalisation, l'intégration du dispositif d'étanchéité se fait par emmanchement.

L'armature 17, par exemple réalisée par emboutissage, comprend une portée axiale intérieure d'emmanchement 17a, une paroi radiale 17b et une portée axiale extérieure 17c qui sont agencées pour former un logement 18 dans lequel le joint 16 est disposé.

Le joint 16 est formé d'une armature 19, par exemple réalisée par emboutissage, comprenant une portée axiale d'emmanchement 19a et une paroi radiale 19b sur laquelle est surmoulé un élément d'étanchéité 20 en matériau élastomérique. L'élément 20 comprend une lèvre radiale 20a et une lèvre axiale 20b, lesdites lèvres étant, lors de la rotation relative des bagues 1, 2, en contact frottant avec la surface interne respectivement de la portée intérieure 17a et de la paroi 17b.

Cette réalisation du dispositif d'étanchéité permet, en utilisant une armature 17 rapportée sur laquelle les lèvres 20a, 20b viennent frotter, de choisir pour l'armature 17 un matériau résistant à l'usure due au contact frottant ainsi qu'à l'oxydation provoquée par la projection d'eau et de boue, et ce sans tenir compte des contraintes mécaniques d'utilisation du palier puisque l'armature 17 ne subit pas les contraintes de roulement. Dans un exemple particulier, l'armature 17 peut être réalisée en inox.

En outre, la portée extérieure 17c de l'armature 17 peut être prévue pour s'étendre axialement au-dessus du joint d'étanchéité 16 et au-delà de la paroi 19b portant l'élément d'étanchéité 20, de sorte à faire fonction de déflecteur. En effet, en laissant un interstice 21 de faible épaisseur entre la portée extérieure 17c et la portée axiale 19a, la possibilité d'accès au logement 18 pour les contaminants en est particulièrement réduite.

Le dispositif d'étanchéité permet ainsi d'assurer l'étanchéité à trois niveaux, à savoir l'interstice 21, le contact axial entre la lèvre axiale 20b qui frotte sur la paroi radiale 17b et le contact radial entre la lèvre radiale 20a qui frotte sur la portée intérieure 17a.

En variante, un ressort 22 peut être disposé dans la lèvre radiale 20a pour, en exerçant un effort radial intérieur sur la lèvre 20a, améliorer le contact entre ladite lèvre 20a et la portée intérieure 17a et donc améliorer encore l'étanchéité.

Selon une variante non représentée, des moyens d'étanchéité statique peuvent être intégrés au dispositif d'étanchéité, par exemple sous la forme de lèvres élastomériques permettant d'étanchéifier les surfaces d'emmanchement respectives.

Comme représenté sur la figure 1, un moyen d'étanchéité classique 23 peut également être utilisé, coté arrière, entre la deuxième partie 2b et la bague extérieure 1.

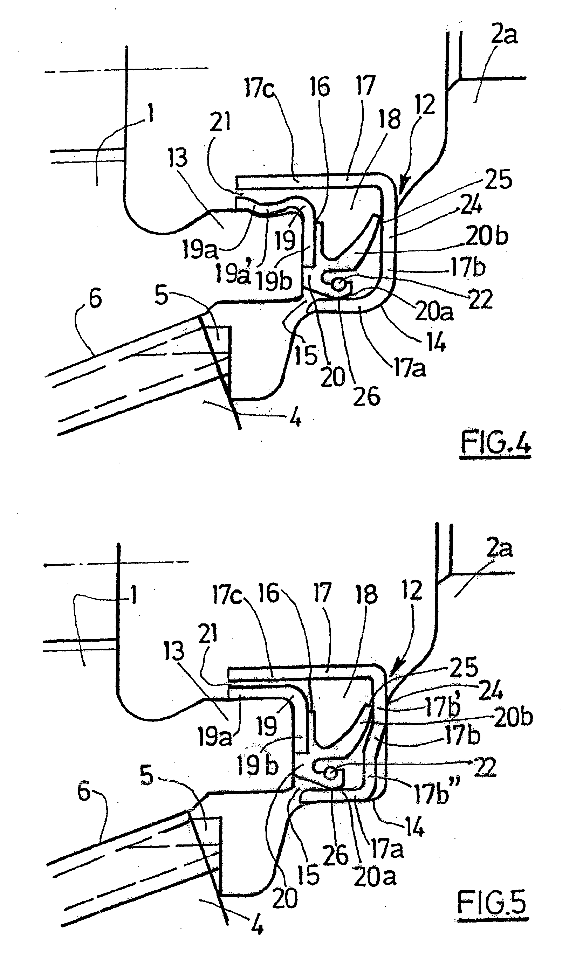

En relation avec les figures 3 à 7, on décrit ci-dessous des variantes de réalisation du dispositif d'étanchéité suivant l'invention.

La variante de la figure 3 prévoit que la partie extrême de la portée extérieure 17c comprenne une partie 17c' décalée axialement vers l'intérieur afin d'améliorer la fonction de déflecteur évoquée ci-dessus.

La variante de la figure 4 prévoit que la portée axiale 19a comprenne une partie 19a' décalée axialement vers l'intérieur afin d'améliorer l'effort de serrage du joint 16 sur la bague extérieure 1.

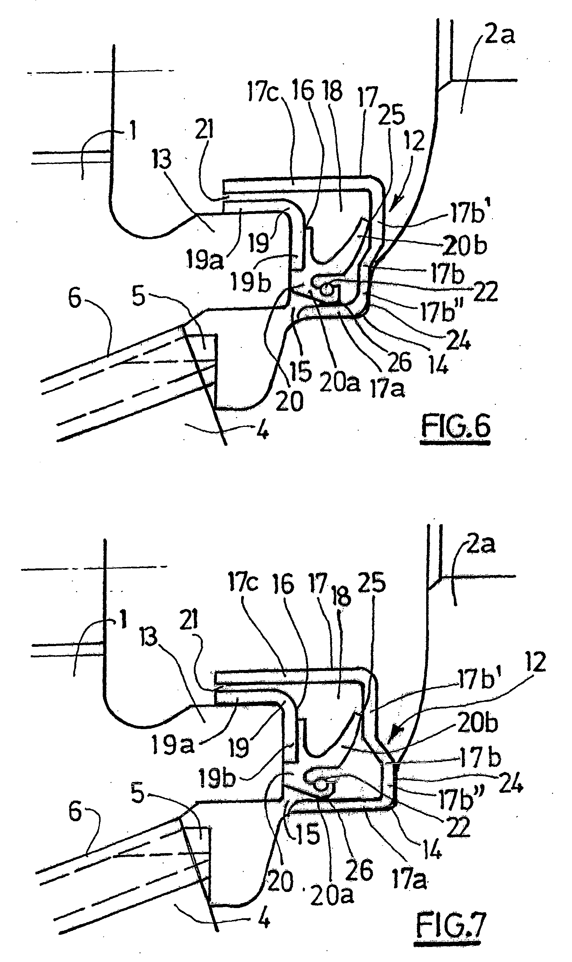

Les variantes des figures 5 à 7 prévoient que la paroi radiale 17b de l'armature 17 comprenne deux parties 17b', 17b" décalées axialement l'une par rapport à l'autre. Ces réalisations permettent, en fonction de la géométrie de la surface de contact 24 entre le logement 12 et la paroi radiale 17b, d'adapter la géométrie de la paroi radiale 17b pour obtenir une solidarisation optimale. En outre, elles permettent, en décalant soit vers l'arrière (figures 5 et 6) soit vers l'avant (figure 7) la surface de contact 25 entre la lèvre axiale 20b et la paroi radiale 17b, d'optimiser ce contact afin d'améliorer l'étanchéité du palier.

On décrit ci-dessous le procédé de montage d'un palier selon l'invention dans lequel :
- les corps roulants 4 sont montés dans le chemin de roulement 6 de la bague intérieure 2 ;
- la bague extérieure 1 préalablement pourvue du joint d'étanchéité 16 est montée sur la bague intérieure 1 préalablement pourvue de l'armature 17.

Ce procédé de montage est rendu possible du fait que le diamètre intérieur du joint 16, c'est-à-dire dans le mode de réalisation représenté le diamètre de la lèvre radiale 20a, est supérieur ou égal au grand diamètre Dₑₓₜ de la surface de roulement du chemin 6 de la bague extérieure 1. De façon équivalente, cette condition peut être exprimée en disant que le diamètre soit de la portée axiale intérieure 17a soit de la surface annulaire de contact 26 entre le joint 16 et la portée axiale intérieure 17a est supérieur ou égal au grand diamètre Dₑₓₜ. Notons également que le diamètre Dₑₓₜ est sensiblement égal au plus grand diamètre extérieur de la rangée de corps roulants 4 lorsque celle ci est montée dans le chemin de roulement 6 de la bague intérieure 2.

En effet, lors du montage, la bague extérieure 1 est déplacée de l'arrière vers l'avant par rapport à la bague intérieure 2, et le joint 16 ne vient pas en contact bloquant avec les corps roulants 4 disposés dans le chemin de roulement 6 de la bague intérieure 2, ce qui permet la mise en place de la bague extérieure 1 sur la bague intérieure 2.

Le procédé de montage du palier représenté sur la figure 1 comprend les étapes prévoyant de :
- monter la première rangée 4a de corps roulants 4 sur la première partie 2a de bague intérieure 2 ;
- monter la bague extérieure 1 préalablement pourvue du joint d'étanchéité 16 sur la première partie 2a de bague intérieure 2 préalablement pourvue de l'armature 17 ;
- monter, dans la bague extérieure 1, la deuxième partie 2b de bague intérieure 2 préalablement pourvue de la deuxième rangée 4b de corps roulants 4.

## Revendications

1. Palier à roulement du type comprenant une bague extérieure (1) et au moins une bague intérieure (2), lesdites bagues comprenant chacune au moins un chemin de roulement oblique (6) pour des corps roulants coniques (4) disposés entre elles, dans lequel un logement annulaire (12) est prévu entre lesdites bagues pour recevoir un dispositif d'étanchéité du palier, ledit palier étant **caractérisé en ce que** le dispositif d'étanchéité comprend un joint d'étanchéité dynamique (16) associé à l'une des bagues, le diamètre intérieur du joint (16) étant supérieur ou égal au grand diamètre (Dₑₓₜ) de la surface de roulement du chemin (6) de la bague extérieure (1), et une armature annulaire (17) associée à l'autre bague, ladite armature (17) comprenant un logement annulaire (18) dans lequel le joint (17) est disposé pour frotter contre ladite armature lors de la rotation relative des bagues (1, 2).

2. Palier selon la revendication 1, **caractérisé en ce que** l'armature (17) comprend une portée axiale intérieure (17a), une paroi radiale (17b) et une portée axiale extérieure (17c) qui sont agencées pour former le logement (18).

3. Palier selon la revendication 2, **caractérisé en ce que** le joint (16) est formé d'une armature (19) comprenant une portée axiale (19a) et une paroi radiale (19b) sur laquelle est surmoulé un élément d'étanchéité (20) en matériau élastomérique, ledit élément (20) comprenant au moins une lèvre radiale (20a) en contact frottant avec la paroi (17a) et au moins une lèvre axiale (20b) en contact frottant avec la portée intérieure (17b).

4. Palier selon la revendication 3, **caractérisé en ce qu'**un ressort (22) est disposé dans la lèvre radiale (20a) pour améliorer le contact entre ladite lèvre et la portée intérieure (17a).

5. Palier selon la revendication 3 ou 4, **caractérisé en ce que** la portée extérieure (17c) de l'armature (17) s'étend axialement au-dessus du joint d'étanchéité (16) et au-delà de la paroi (19b) portant l'élément d'étanchéité (20).

6. Palier selon la revendication 5, **caractérisé en ce que** la partie extrême de la portée extérieure (17c) comprend une partie (17c') qui est décalée axialement vers l'intérieur.

7. Palier selon l'une quelconque des revendications 3 à 6, **caractérisé en ce que** la portée axiale (19a) comprend une partie (19a') qui est décalée axialement vers l'intérieur.

8. Palier selon l'une quelconque des revendications 2 à 7, **caractérisé en ce que** la paroi radiale (17b) comprend deux parties (17b', 17b") qui sont décalées axialement l'une par rapport à l'autre, la lèvre axiale (20b) étant en contact frottant avec l'une de ces parties (17b').

9. Procédé de montage d'un palier selon l'une quelconque des revendications 1 à 8, ledit procédé comprenant les étapes prévoyant de :
- monter les corps roulants (4) sur la bague intérieure (2) ;
- monter la bague extérieure (1) préalablement pourvue du joint d'étanchéité (16) sur la bague intérieure (2) préalablement pourvue de l'armature (17).

10. Procédé de montage d'un palier selon l'une quelconque des revendications 1 à 8, ledit palier comprenant une bague intérieure (2) en deux parties (2a, 2b) sur lesquelles sont respectivement disposées une rangée (4a, 4b) de corps roulants (4), ledit procédé comprenant les étapes prévoyant de :
- monter la première rangée (4a) de corps roulants (4) sur la première partie (2a) de bague intérieure (2) ;
- monter la bague extérieure (1) préalablement pourvue du joint d'étanchéité (16) sur la première partie (2a) de bague intérieure (2) préalablement pourvue de l'armature (17) ;
- monter, dans la bague extérieure (1), la deuxième partie (2b) de bague intérieure (2) préalablement pourvue de la deuxième rangée (4b) de corps roulants (4).
